# FASCICULE DE BREVET EUROPEEN

(11) **EP 2 003 522 B1**
(45) Date de publication et mention de la délivrance du brevet: **28.11.2012**
(21) Numéro de dépôt: 07011469.9
(22) Date de dépôt: 12.06.2007
(51) Int. Cl.: G04B 13/02, F16H 55/16

(54) **Mobile denté à rattrapage de jeu pour engrenage, notamment d'horlogerie**
Zahnrad mit Spielnachstellung für Getriebe, insbesondere für Uhren
Toothed gear with backlash compensation, in particular for timepieces

(43) Date de publication de la demande: 17.12.2008
(73) Titulaire: Chopard Manufacture SA, 2114 Fleurier (CH)
(72) Inventeur: Scheufele, Karl-Friedrich, 1197 Prangins (CH)
(74) Mandataire: Micheli & Cie SA

(56) Documents cités:
- EP-A- 1 380 772
- EP-A- 1 555 584
- JP-A- 63 130 961

## Description

La présente invention concerne un mobile denté, tel qu'une roue, un pignon ou un râteau, pour un engrenage, notamment d'horlogerie.

On sait que dans les pièces d'horlogerie, telles que les montres-bracelets, les jeux d'engrenage nuisent à la précision d'affichage. Dans le cas par exemple d'une aiguille excentrée, les jeux d'engrenage peuvent faire chevroter l'aiguille sous l'effet des mouvements de l'utilisateur. Dans les affichages à aiguille rétrograde, tels que l'indication de l'équation du temps, l'aiguille ne peut repartir dans l'autre sens qu'un certain temps après l'inversion du mouvement du rouage qui l'entraîne, une fois que les jeux ont été rattrapés. Les jeux d'engrenage peuvent se cumuler dans un même rouage. Ils sont donc d'autant plus importants et préjudiciables que le nombre d'engrenages dans le rouage est élevé.

Des mobiles dentés permettant de rattraper le jeu d'un engrenage sont décrits dans les demandes de brevet WO 2004/008004, EP 1 555 584 et EP 1 744 081. Ces mobiles ont des dents qui sont plus larges que des dents normales, pour diminuer l'espace entre deux dents consécutives et donc réduire ou supprimer le jeu, mais qui peuvent se déformer ou se déplacer élastiquement en cas de serrage pour éviter un blocage de l'engrenage. La déformation ou la mobilité élastique des dents est obtenue par des fentes et/ou des évidements pratiqués dans les dents ou dans la planche du mobile. Dans certains modes de réalisation proposés, les dents sont constituées d'une partie rigide et d'une partie élastique qui peut s'appuyer contre la partie rigide en cas de serrage. Dans d'autres modes de réalisation, les dents sont constituées de deux parties élastiques qui peuvent s'appuyer l'une contre l'autre. Dans d'autres modes de réalisation encore, les dents sont rigides mais reliées élastiquement à la planche du mobile par des lames flexibles. Dans un mode de réalisation illustré à la figure 9 du document EP 1 555 584, une dent sur deux comporte une partie rigide et une partie élastique et les autres dents sont fixes et entièrement rigides.

Un inconvénient des mobiles dentés à rattrapage de jeu évoqués ci-dessus est qu'ils ne peuvent rattraper qu'un jeu relativement faible, en raison du fait que les parties élastiques des dents ont de petites dimensions et doivent vite être mises en butée contre une partie rigide lors d'un serrage de l'engrenage pour ne pas dépasser leur limite élastique.

La présente invention vise à remédier à cet inconvénient et propose à cette fin un mobile denté à rattrapage de jeu pour engrenage, notamment d'horlogerie, dont certaines des dents sont fixes et entièrement rigides et dont d'autres dents, intercalées chacune entre deux desdites dents rigides, sont déformables élastiquement, caractérisé en ce que lesdites dents déformables élastiquement sont constituées par des lames ressort comprenant chacune un flanc d'engrènement et en ce que, pour chaque lame ressort, la distance, mesurée sur le cercle primitif du mobile, entre le flanc d'engrènement de la lame ressort et le flanc homologue de celle des deux dents rigides adjacentes qui est en regard du flanc d'engrènement est inférieure à la distance, elle aussi mesurée sur le cercle primitif du mobile, entre le flanc d'engrènement et le flanc homologue de l'autre dent rigide adjacente.

La présente invention propose également un engrenage comprenant un mobile denté tel que défini ci-dessus et un second mobile engrenant avec le mobile denté.

Des modes de réalisation particuliers de l'invention sont définis dans les revendications dépendantes annexées 2 à 4 et 6 à 9.

D'autres caractéristiques et avantages de la présente invention apparaîtront à la lecture de la description détaillée suivante de plusieurs modes de réalisation faite en référence aux dessins annexés dans lesquels :
- la figure 1 est une vue plane partielle d'un engrenage à rattrapage de jeu selon un premier mode de réalisation de l'invention dans une position neutre ;
- la figure 2 est une vue plane partielle de l'engrenage selon le premier mode de réalisation de l'invention dans une position venant après celle de la figure 1 ;
- la figure 3 est une vue plane partielle de l'engrenage selon le premier mode de réalisation de l'invention dans une position venant après celle de la figure 2 ;
- la figure 4 est une vue plane d'un engrenage selon un second mode de réalisation de l'invention ;
- la figure 5 est une vue plane partielle d'un engrenage selon un troisième mode de réalisation de l'invention.

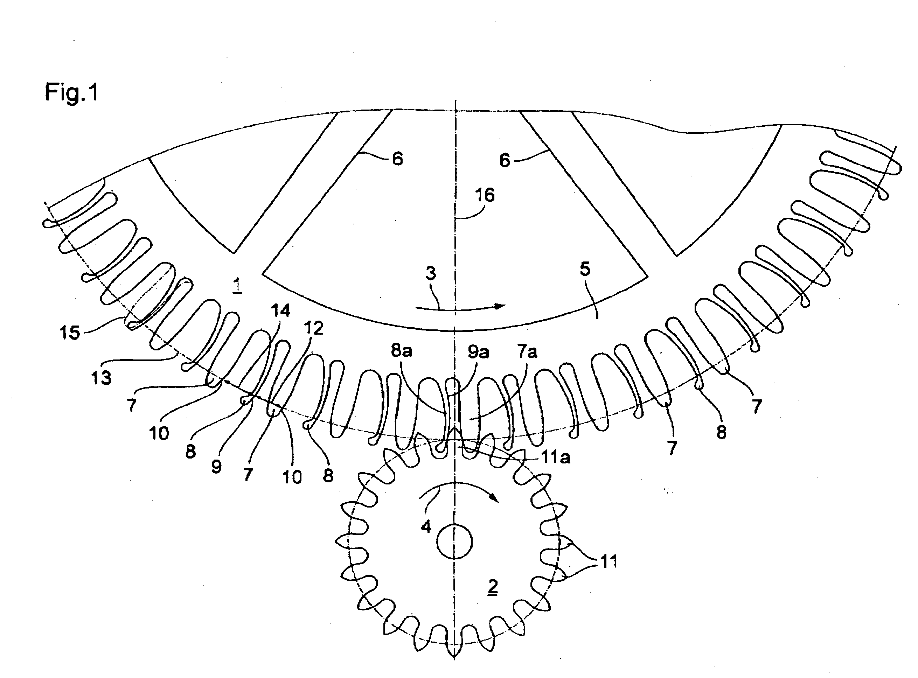

En référence aux figures 1 à 3, un engrenage pour une pièce d'horlogerie, en particulier une montre-bracelet, selon un premier mode de réalisation de l'invention comprend une roue dentée menante à rattrapage de jeu 1 et un pignon mené 2. Dans une application typique mais non exclusive de l'invention, l'axe du pignon 2 porte une aiguille indicatrice (non représentée) mobile au-dessus d'un cadran, par exemple une aiguille de secondes décentrée. Les sens de rotation de la roue 1 et du pignon 2 sont indiqués par les flèches 3, 4. Dans l'exemple représenté, la partie intérieure de la roue dentée 1 est évidée et comporte une serge 5 et des bras radiaux 6 mais, en variante, elle pourrait être pleine.

La roue 1 comprend des dents 7 régulièrement réparties sur sa périphérie. Ces dents 7 sont fixes par rapport à la partie intérieure 5, 6 de la roue 1. Ces dents 7 sont en outre entièrement rigides, c'est-à-dire qu'elles ne comportent pas de partie élastique. Une dent 7 sur deux a été supprimée pour laisser la place à des lames ressort 8 intercalées entre les dents 7. Chaque lame ressort 8 est rattachée par l'une de ses extrémités à la serge 5 et son autre extrémité est libre. Chaque lame ressort 8 a une forme courbe et comporte un flanc d'engrènement convexe 9 ayant dans sa partie haute, fonctionnelle, un profil similaire à celui de la partie haute du flanc homologue 10 des dents rigides 7.

Chaque lame ressort 8 joue ainsi le rôle d'une dent et laisse donc deux espaces suffisants entre elle et les deux dents rigides 7 entre lesquelles elle est située pour recevoir des dents 11 du pignon 2. Outre leur fonction d'engrènement, les lames ressort 8 servent à rattraper le jeu d'engrenage. A cet effet, chaque lame ressort 8 est plus proche de l'une de ses deux dents rigides adjacentes 7 que de l'autre. Plus précisément, la distance 12, mesurée sur le cercle primitif 13 de la roue 1, entre le flanc d'engrènement 9 de la lame ressort 8 et le flanc homologue 10 de celle des deux dents rigides adjacentes 7 qui est en regard du flanc d'engrènement 9 est inférieure à la distance 14, elle aussi mesurée sur le cercle primitif 13, entre le flanc d'engrènement 9 et le flanc homologue 10 de l'autre dent rigide adjacente 7. En d'autres termes, le flanc d'engrènement 9 de chaque lame ressort 8 est plus proche de la dent rigide adjacente en regard 7 que ne le serait le flanc correspondant d'une dent normale, montrée en traits pointillés au niveau du repère 15, si une dent 7 sur deux n'avait pas été remplacée par les lames ressort 8.

Cet agencement des lames élastiques 8 permet de rattraper une partie au moins du jeu d'engrenage. Pour rattraper complètement ce jeu, l'écartement entre chaque lame ressort 8 et la dent rigide 7 qui lui est la plus proche est choisie de façon que, dans une position neutre de l'engrenage, représentée à la figure 1, où la ligne passant par le centre du pignon 2 et le sommet de l'une 11a des dents 11 du pignon 2 est confondue avec la ligne 16 passant par les centres respectifs du pignon 2 et de la roue 1 (« ligne des centres ») et où ladite dent 11a est située entre le flanc d'engrènement 9a d'une lame ressort 8a et une dent rigide 7a, ladite dent 11a soit légèrement serrée contre la dent rigide 7a par la lame ressort 8a.

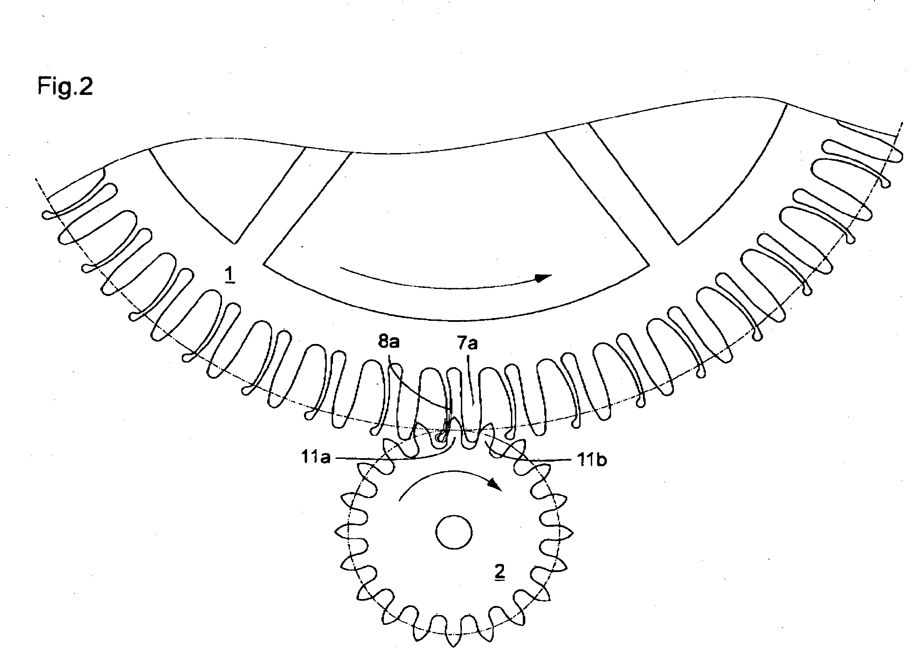

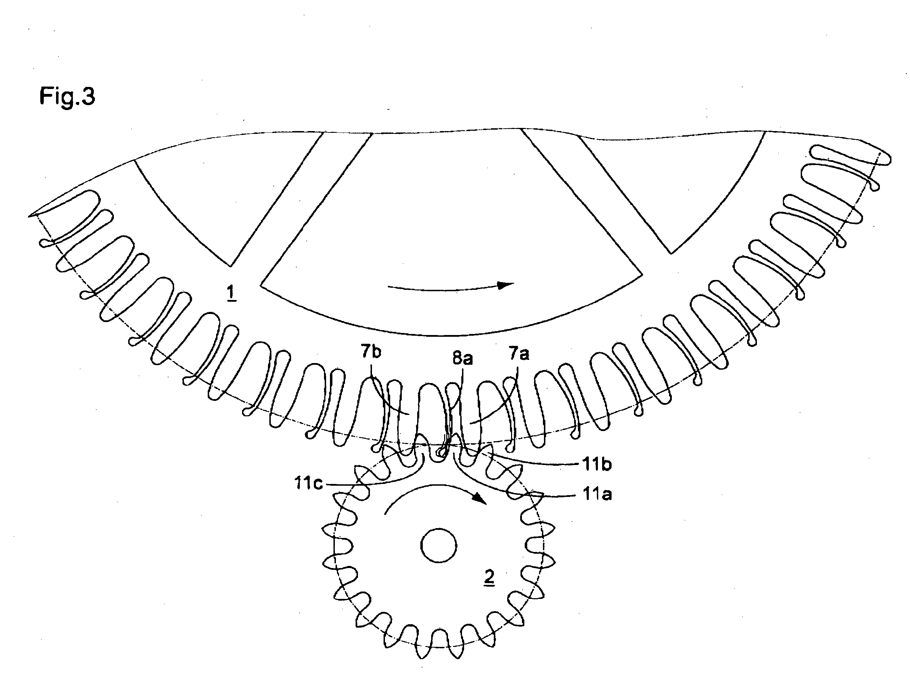

La transmission du couple entre la roue 1 et le pignon 2 est assurée en grande partie par les dents rigides 7 et seulement en petite partie par les lames ressort 8. La figure 2 montre une position venant après celle illustrée à la figure 1. De la position de la figure 1 à celle de la figure 2, la dent 11a du pignon 2 est d'abord entraînée par la lame ressort 8a puis rapidement c'est la dent rigide 7a qui prend le relais en poussant une dent aval 11 b du pignon 2. Peu après (figure 3), la dent rigide 7a pousse encore la dent aval 11 b du pignon 2 et une dent amont 11c du pignon 2 est simultanément poussée par la dent rigide 7b située de l'autre côté de la lame ressort 8a. Dans les positions des figures 2 et 3, la lame ressort 8a est tendue élastiquement par la dent 11 a pour ne pas bloquer l'engrenage. Cette tension est limitée à une valeur inférieure à la limite élastique de la lame 8a par le double contact entre les dents rigides 7a, 7b et les dents 11 b, 11 c du pignon 2.

Dans la position neutre illustrée à la figure 1, l'engrenage est sans jeu. Dans les positions illustrées aux figures 2 et 3, en cas de mouvement brusque de l'utilisateur ou de choc faisant perdre le contact entre les dents rigides 7a, 7b et les dents 11b, 11c du pignon 2, la lame ressort sollicitée 8a rattrapera immédiatement le jeu en plaquant la dent 11a du pignon 2 contre la dent rigide 7a et empêchera ainsi le pignon 2 et l'aiguille qui en est solidaire de chevroter.

L'engrenage selon l'invention peut fonctionner également dans le sens inverse de celui indiqué par les flèches 3, 4. Par ailleurs, en variante, le pignon 2 pourrait être le mobile menant et la roue 1 le mobile mené.

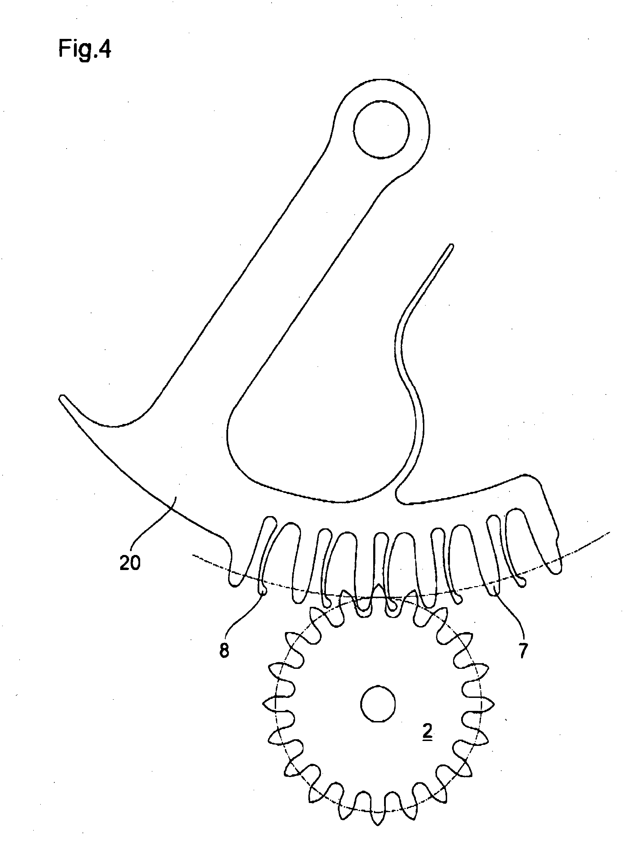

La figure 4 montre un second mode de réalisation de l'invention dans lequel la roue menante est remplacée par un râteau 20 de même denture. Ce râteau 20 effectue un mouvement de va-et-vient pour un affichage rétrograde d'une grandeur, par exemple l'équation du temps, par l'aiguille solidaire du pignon 2. En rattrapant le jeu, les lames ressort 8 du râteau 20 permettent au pignon 2 d'être entraîné immédiatement en sens inverse après une inversion de sens de la rotation du râteau 20.

Les lames ressort 8 de l'engrenage selon l'invention sont avantageuses par rapport aux parties élastiques des dents à rattrapage de jeu décrites dans l'état de la technique en ce qu'elles peuvent être conformées et dimensionnées avec beaucoup plus de liberté, du fait qu'elles sont situées dans un espace plus grand obtenu par la suppression d'une dent 7 sur deux. Les lames ressort 8 peuvent ainsi avoir de plus grandes dimensions, c'est-à-dire une plus grande épaisseur et une plus grande longueur, et donc une plus grande force et/ou une plus grande déformabilité que les parties élastiques précitées. On constatera à cet égard que les dentures de la roue 1 et du râteau 20 dans les modes de réalisation représentés sur les dessins sont bien plus profondes qu'une denture usuelle. Une telle profondeur augmente sensiblement la déformabilité des lames ressort 8. Ces dernières peuvent ainsi rattraper un plus grand jeu, de sorte que l'engrenage selon l'invention sera moins sensible aux variations d'entre axe, c'est-à-dire aux variations de la distance entre les centres respectifs de la roue 1 (respectivement du râteau 20) et du pignon 2. On notera en outre que le couple transmis entre la roue 1 (respectivement le râteau 20) et le pignon 2 reste élevé du fait que ce couple est essentiellement transmis par les dents rigides 7.

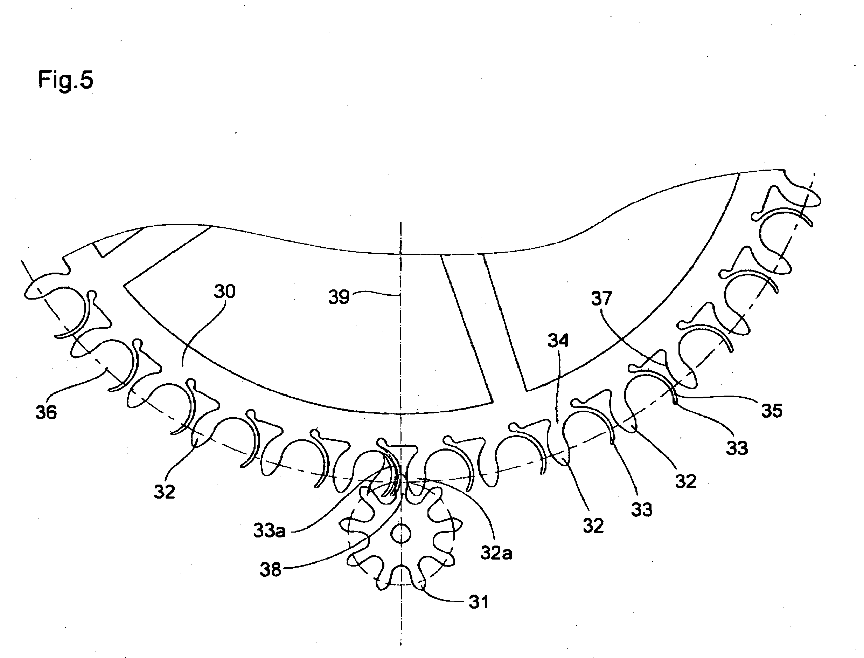

Un troisième de mode de réalisation de l'engrenage selon l'invention est représenté à la figure 5. Dans ce troisième mode de réalisation, l'engrenage comprend une roue dentée 30 et un pignon 31. La denture de la roue 30 est constituée de dents fixes et rigides 32 qui alternent avec des dents 33 formant des lames ressort. Chaque lame ressort 33 a une courbure plus prononcée que les lames 8 des modes de réalisation précédents, qui lui permet d'être plus proche de sa dent rigide associée 32 tout en conservant une grande longueur et donc une grande déformabilité. De plus, chaque lame ressort 33 part du pied 34 de l'autre dent rigide 32 qui lui est adjacente, ce qui facilite l'obtention d'une forte courbure pour ces lames ressort 33 et confère en même temps un aspect esthétique particulier aux dents 32, 33 et à la roue 30.

Ainsi, le flanc d'engrènement 35 de chaque lame ressort 33, de forme convexe, est en regard et très proche, sur le cercle primitif 36 de la roue 30, d'un flanc convexe 37 d'une dent rigide 32. Dans une position neutre de l'engrenage, représentée à la figure 5, où une dent 38 du pignon est située entre une lame ressort 33a et la dent rigide associée 32a et sur la ligne des centres 39, ladite dent 38 est ainsi serrée assez fortement entre la lame ressort 33a et la dent rigide 32a de manière à produire un encliquetage qui positionne angulairement la roue 30 et le pignon 31 l'un par rapport à l'autre. L'engrenage peut donc tourner par sauts successifs en s'arrêtant à chaque fois dans une position angulaire bien déterminée. Ce positionnement de l'engrenage est obtenu uniquement par l'action de serrage exercée par la lame ressort sollicitée 33a. De la sorte, on évite le recours à un ressort sautoir qui coopérerait avec un pignon solidaire de la roue 30. Le type d'engrenage représenté à la figure 5 peut être utilisé, par exemple, pour faire tourner une aiguille indicatrice du quantième, des jours de la semaine ou des mois.

La présente invention a été décrite ci-dessus à titre d'exemple uniquement. Il va de soi que des modifications pourraient être faites sans sortir du cadre de l'invention revendiquée. On pourrait notamment prévoir un nombre différents de dents rigides et de dents élastiques sur le mobile à rattrapage de jeu. Par exemple, on pourrait prévoir que seulement une dent sur trois du mobile à rattrapage de jeu soit une lame ressort, pour autant que l'autre mobile, en l'occurrence le pignon, ait un nombre de dents suffisant.

## Revendications

1. Mobile denté à rattrapage de jeu (1) pour engrenage, notamment d'horlogerie, dont certaines (7) des dents sont fixes et entièrement rigides et dont d'autres dents (8), intercalées chacune entre deux desdites dents rigides (7), sont déformables élastiquement, **caractérisé en ce que** lesdites dents déformables élastiquement (8) sont constituées par des lames ressort comprenant chacune un flanc d'engrènement (9) et **en ce que**, pour chaque lame ressort (8), la distance (12), mesurée sur le cercle primitif (13) du mobile (1), entre le flanc d'engrènement (9) de la lame ressort (8) et le flanc homologue (10) de celle des deux dents rigides adjacentes (7) qui est en regard du flanc d'engrènement (9) est inférieure à la distance (14), elle aussi mesurée sur le cercle primitif (13) du mobile (1), entre le flanc d'engrènement (9) et le flanc homologue (10) de l'autre dent rigide adjacente (7).

2. Mobile denté selon la revendication 1, **caractérisé en ce qu'**une dent sur deux de sa denture est une dent rigide (7) et une dent sur deux est une lame ressort (8).

3. Mobile denté selon la revendication 1 ou 2, **caractérisé en ce qu'**il consiste en une roue (1 ; 30).

4. Mobile denté selon la revendication 1 ou 2, **caractérisé en ce qu'**il consiste en un râteau (20).

5. Engrenage comprenant un premier mobile (1 ; 20; 30) selon l'une quelconque des revendications 1 à 4 et un second mobile (2 ; 31) engrenant avec le premier mobile.

6. Engrenage selon la revendication 5, **caractérisé en ce que** le flanc d'engrènement (9 ; 35) de chaque lame ressort (8 ; 33) est suffisamment proche de la dent rigide (7 ; 32) dont il est en regard pour que, dans une position où l'une (11a ; 38) des dents du second mobile (2 ; 31) est située entre le flanc d'engrènement (9 ; 35) d'une lame ressort (8a ; 33a) et une dent rigide (7a ; 32a) et sur la ligne (16 ; 39) passant par les centres respectifs des premier et second mobiles (1, 2 ; 30, 31), ladite dent (11a ; 38) du second mobile (2 ; 31) soit serrée contre ladite dent rigide (7a ; 32a) par ladite lame ressort (8a ; 33a).

7. Engrenage selon la revendication 6, **caractérisé en ce que** le flanc d'engrènement (35) de chaque lame ressort (33) est suffisamment proche de la dent rigide (32) dont il est en regard pour que les mobiles (30, 31) puissent être positionnés angulairement l'un par rapport à l'autre dans des positions où une dent (38) du second mobile (31) est située entre le flanc d'engrènement (35) d'une lame ressort (33a) et une dent rigide (32a) et sur ladite ligne (39) uniquement par l'action de serrage exercée par ladite lame ressort (33a) sur ladite dent (38) du second mobile (31).

8. Engrenage selon la revendication 7, **caractérisé en ce que** les lames ressort (33) sont courbes et s'étendent chacune depuis le pied (34) d'une dent rigide (32).

9. Engrenage selon l'une quelconque des revendications 5 à 8, **caractérisé en ce que** le second mobile (2 ; 31) est un pignon.

## Claims

1. Toothed mobile part (1) for play take-up in a gear, particularly in horology, having certain (7) of its teeth fixed and entirely rigid, and other (8) of its teeth each intercalated between two of said rigid teeth (7) and elastically deformable, **characterised in that** said elastically deformable teeth (8) consist of spring blades each comprising a gear flank (9), and **in that** for each spring blade (8) the distance (12) measured on the pitch circle (13) of the mobile part (1), between the gear flank (9) of the spring blade (8) and the corresponding flank (10) of the one among the two adjacent rigid teeth (7) facing the gear flank (9) is smaller than the distance (14), again measured on the pitch circle (13) of the mobile part (1), between the gear flank (9) and the corresponding flank (10) of the other adjacent rigid tooth (7).

2. Toothed mobile part according to claim 1, **characterised in that** every other tooth among its teeth is a rigid tooth (7), and every other tooth is a spring blade (8).

3. Toothed mobile part according to claim 1 or 2, **characterised in that** it consists of a wheel (1; 30).

4. Toothed mobile part according to claim 1 or 2, **characterised in that** it consists of a rack (20).

5. Gear comprising a first mobile part (1; 20; 30) according to any of claims 1 to 4, and a second mobile part (2; 31) engaged with the first mobile part.

6. Gear according to claim 5, **characterised in that** the gear flank (9; 35) of each spring blade (8; 33) is sufficiently close to the rigid tooth (7; 32) that it faces, so that in a position where one (11 a; 38) of the teeth of the second mobile part (2; 31) is situated between the gear flank (9; 35) of a spring blade (8a; 33a) and a rigid tooth (7a, 32a) and on the line (16; 39) passing through the respective centres of the first and second mobile parts (1, 2; 30, 31), said tooth (11a; 38) of the second mobile part (2; 31) is squeezed against said rigid tooth (7a; 32a) by said spring blade (8a; 33a).

7. Gear according to claim 6, **characterised in that** the gear flank (35) of each spring blade (33) is sufficiently close to the rigid tooth (32) that it faces, so that the mobile parts (30, 31) will be able to be angularly positioned relative to each other to positions where one tooth (38) of the second mobile part (31) is situated between the gear flank (35) of one spring blade (33a) and one rigid tooth (32a) and on said line (39), only through the squeezing action exerted by said spring blade (33a) on said tooth (38) of the second mobile part (31).

8. Gear according to claim 7, **characterised in that** the spring blades (33) are curved, and each rise from the bottom (34) of a rigid tooth (32).

9. Gear according to any of claims 5 to 8, **characterised in that** the second mobile part (2; 31) is a pinion.

## Patentansprüche

1. Zahndrehteil mit Spielnachstellung (1) für Getriebe, insbesondere für Uhren, von dem bestimmte (7) der Zähne fest und vollständig starr sind, und von dem andere Zähne (8), die jeweils zwischen zwei der starren Zähne (7) eingefügt sind, elastisch verformbar sind, **dadurch gekennzeichnet, dass** die elastisch verformbaren Zähne (8) durch Federblätter gebildet sind, die jedes eine Eingriffsflanke (9) umfassen, und dadurch, dass für jedes Federblatt (8) der Abstand (12), der auf dem Teilkreis (13) des Drehteils (1) zwischen der Eingriffsflanke (9) des Federblatts (8) und der gleichgerichteten Flanke (10) von demjenigen der zwei benachbarten starren Zähne (7), der der Eingriffsflanke (9) gegenübersteht, gemessen wird, kleiner ist als der Abstand (14), der ebenfalls auf dem Teilkreis (13) des Drehteils (1) zwischen der Eingriffsflanke (9) und der gleichgerichteten Flanke (10) des anderen benachbarten starren Zahns (7) gemessen wird.

2. Zahndrehteil nach Anspruch 1, **dadurch gekennzeichnet, dass** jeder zweite Zahn seiner Verzahnung ein starrer Zahn (7) ist und jeder zweite Zahn ein Federblatt (8) ist.

3. Zahndrehteil nach Anspruch 1 oder 2, **dadurch gekennzeichnet, dass** er aus einem Rad (1; 30) besteht.

4. Zahndrehteil nach Anspruch 1 oder 2, **dadurch gekennzeichnet, dass** er aus einem Rechen (20) besteht.

5. Getriebe, das einen ersten Drehteil (1; 20; 30) nach einem der Ansprüche 1 bis 4 und einen zweiten Drehteil (2; 31) umfasst, der in den ersten Drehteil eingreift.

6. Getriebe nach Anspruch 5, **dadurch gekennzeichnet, dass** die Eingriffsflanke (9; 35) von jedem Federblatt (8; 33) ausreichend nahe am starren Zahn (7; 32) liegt, dem sie gegenübersteht, damit in einer Stellung, in der eine (11a; 38) der Zähne des zweiten Drehteils (2; 31) sich zwischen der Eingriffsflanke (9; 35) eines Federblatts (8a; 33a) und einem starren Zahn (7a; 32a) und auf der Linie (16; 39) befindet, die durch die jeweiligen Mittelpunkte des ersten und des zweiten Drehteils (1, 2; 30, 31) verläuft, der Zahn (11a; 38) des zweiten Drehteils (2; 31) durch das Federblatt (8a; 32a) gegen den starren Zahn (7a; 32a) geklemmt wird.

7. Getriebe nach Anspruch 6, **dadurch gekennzeichnet, dass** die Eingriffsflanke (35) von jedem Federblatt (33) ausreichend nahe am starren Zahn (32) liegt, dem sie gegenübersteht, damit die Drehteile (30; 31) lediglich durch die Wirkung des durch ein Federblatt (33a) auf einen Zahn (38) des zweiten Drehteils (31) ausgeübten Klemmens winklig in Stellungen zueinander positioniert werden können, in denen der Zahn (38) des zweiten Drehteils (31) sich zwischen der Eingriffsflanke (35) des Federblatts (33a) und einem starren Zahn (32a) und auf der Linie (39) befindet.

8. Getriebe nach Anspruch 7, **dadurch gekennzeichnet, dass** die Federblätter (33) gebogen sind und sich jedes vom Fuß (34) eines starren Zahns (32) erstrecken.

9. Getriebe nach einem der Ansprüche 5 bis 8, **dadurch gekennzeichnet, dass** der zweite Drehteil (2; 31) ein Trieb ist.
